# EUROPEAN PATENT APPLICATION

(11) **EP 4 715 958 A1**
(43) Date of publication of application: **25.03.2026**
(21) Application number: 24904382.9
(22) Date of filing: 12.12.2024
(51) Int. Cl.: H01M 10/48, H01M 50/569, H01M 50/291

(54) **BATTERY CELL ASSEMBLY AND BATTERY PACK COMPRISING SAME**

(30) Priority: 15.12.2023 KR 20230182801; 31.10.2024 KR 20240151904
(71) Applicant: LG Energy Solution, Ltd., Seoul 07335 (KR)
(72) Inventor: SHIN, Ju Hwan, Daejeon 34122 (KR); JEON, Jong Pil, Daejeon 34122 (KR); LEE, Hyoung Suk, Daejeon 34122 (KR)
(74) Representative: Hoffmann Eitle
(86) International application number: PCT/KR2024/096771
(87) International publication number: WO 2025/127817

(57) **Abstract**

Embodiments provide a battery cell assembly. The battery cell assembly includes a plurality of battery cells, first and second cross-beams spaced apart from each other with the plurality of battery cells between the first and second cross-beams, a second circuit assembly including an integrated circuit coupled to the plurality of battery cells and configured to measure voltages of the plurality of battery cells, a first temperature sensor spaced apart from the plurality of battery cells while in contact with the first cross-beam, and a second temperature sensor spaced apart from the plurality of battery cells while in contact with the second cross-beam.

## Description

### [TECHNICAL FIELD]

The present invention relates to a battery cell assembly and a battery pack including the same. The present application claims the benefit of priority based on Korean Patent Application No. 10-2023-0182801, filed on December 15, 2023 and Korean Patent Application No. 10-2024-0151904, filed on October 31, 2024, and the entire contents of the Korean patent applications are incorporated herein by reference.

### [BACKGROUND Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### [Disclosure]

### [Technical Problem]

The present invention is directed to providing a battery cell assembly capable of monitoring a temperature distribution inside a cell, and a battery pack including the same.

### [Technical Solution]

Embodiments of the present invention provide a battery cell assembly. The battery cell assembly includes a plurality of battery cells, first and second cross-beams spaced apart from each other with the plurality of battery cells between the first and second cross-beams, a circuit assembly including an integrated circuit coupled to the plurality of battery cells and configured to measure voltages of the plurality of battery cells, a first temperature sensor spaced apart from the plurality of battery cells while in contact with the first cross-beam, and a second temperature sensor spaced apart from the plurality of battery cells while in contact with the second cross-beam.

The first cross-beam may include a first cavity, and the first temperature sensor may be in the first cavity.

The first cavity may be longer than each of the plurality of battery cells.

The first cross-beam may include first and second vertical ribs that define the first cavity, and first and second horizontal ribs between the first and second vertical ribs, and the first temperature sensor may be in contact with the first vertical rib.

The first vertical rib of the first cross-beam may include a first slit connected to the first cavity.

The integrated circuit may include a first cable connected to the first temperature sensor while passing through the first slit.

The second cross-beam may include a second cavity, and the second temperature sensor may be in the second cavity.

The second cross-beam may include third and fourth vertical ribs that define the second cavity, and third and fourth horizontal ribs between the third and fourth vertical ribs, and the second temperature sensor may be in contact with the third vertical rib.

The third vertical rib of the second cross-beam may include a second slit connected to the second cavity.

The integrated circuit may include a second cable connected to the second temperature sensor while passing through the second slit.

Embodiments provide a battery pack. The battery pack includes a pack housing, and a plurality of battery cell assemblies on a base plate of the pack housing. Each of the plurality of battery cell assemblies includes a plurality of battery cells, first and second cross-beams spaced apart from each other with the plurality of battery cells between the first and second cross-beams, a first temperature sensor in a first cavity of the first cross-beam, and a second temperature sensor in a second cavity of the second cross-beam.

A distance between the second temperature sensor and the base plate may be less than a distance between the first temperature sensor and the base plate.

### [Advantageous Effects]

According to embodiments of the present invention, a battery cell assembly may include first and second cross-beams coupled to a cell block, a first temperature sensor coupled to the first cross-beam, and a second temperature sensor coupled to the second cross-beam. Accordingly, a temperature distribution in the battery cell assembly can be measured, and improved temperature monitoring of the battery cell assembly can be provided.

Effects achievable from embodiments of the present invention are not limited to the above-described effects, and other effects that are not described herein will be clearly derived and understood by those of ordinary skilled in the art to which the embodiments of the present invention pertain from the following description. That is, unintended effects achieved when the embodiments of the present invention are implemented are derivable by those of ordinary skilled in the art from the embodiments of the present invention.

### [BRIEF DESCRIPTION OF THE DRAWINGS]

FIG. 1 is a plan view of a battery pack according to embodiments.
FIGS. 2 to 5 are perspective views of the battery cell assembly of FIG. 1.
FIGS. 6 and 7 are an exploded front view and an exploded rear view of the battery cell assembly of FIG. 1.
FIG. 8 is a diagram for describing a battery cell assembly 120' according to other embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

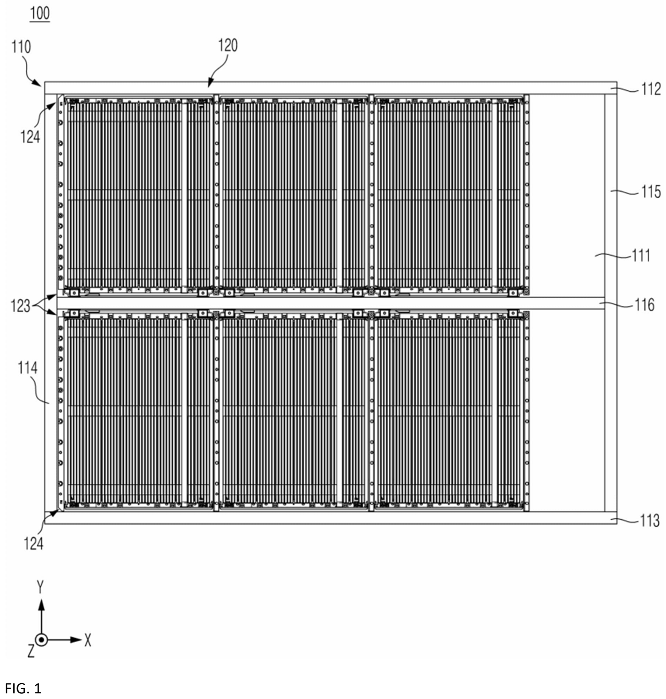

FIG. 1 is a plan view of a battery pack according to embodiments.

Referring to FIG. 1, a battery pack 100 may include a pack housing 110 and a plurality of battery cell assemblies 120. The battery pack 100 may be a final product to be mounted in an application such as a vehicle.

The pack housing 110 may provide a space for mounting the battery cell assemblies 120 therein. The pack housing 110 may include a base plate 111 and side walls 112, 113, 114, and 115.

Here, two directions substantially parallel to a mounting surface 111M (i.e., a surface facing the battery cell assemblies 120) of the base plate 111 are defined as an X-axis direction and a Y-axis direction, and a direction substantially perpendicular to the mounting surface 111M of the base plate 111 is defined as a Z-axis direction. The X-axis direction, the Y-axis direction, and the Z-axis direction may be substantially perpendicular to one another.

Each of the base plate 111 and the side walls 112 and 113 may be provided by an extrusion process. An extrusion direction of each of the base plate 111 and the side walls 112 and 113 may be the X-axis direction. The side walls 114 and 115 may also be provided by the extrusion process. The side walls 112, 113, 114, and 115 may be substantially perpendicular to the base plate 111.

According to embodiments, the base plate 111 and the side walls 112 and 113 may be coupled by friction stir welding. The base plate 111 may include a plurality of unit plates coupled to each other by friction stir welding.

The pack housing 110 may include a center beam 116. The center beam 116 may extend in the X-axis direction. The center beam 116 may be interposed between the side walls 112 and 113. The center beam 116 may be included in a center plate that is one of the plurality of unit plates coupled to each other by friction stir welding. Accordingly, the center beam 116 may be formed together with the center plate, and be an element integrally formed with the center plate.

The base plate 111 may include a plurality of cooling channels. The plurality of cooling channels may provide a passage for moving, for example, a refrigerant such as water. The plurality of cooling channels may be formed by the extrusion process. The plurality of cooling channels may extend in the X-axis direction. The plurality of cooling channels may be spaced apart from each other in the Y-axis direction.

The plurality of battery cell assemblies 120 may be on the base plate 111 of the pack housing 110. The base plate 111 may support the plurality of battery cell assemblies 120. The side walls 112, 113, 114, and 115 may horizontally surround the plurality of battery cell assemblies 120. The side walls 112, 113, 114, and 115 may protect the plurality of battery cell assemblies 120.

Hereinafter, the technical idea of the present invention will be described with respect to an embodiment in which the battery pack 100 is of a moduleless type and each of the plurality of battery cell assemblies 120 does not include a module frame, but the embodiment is only an example and does not limit the technical idea of the present invention in any sense. Those of ordinary skill in the art will be able to easily derive an embodiment in which a battery pack is of a module type and each of a plurality of battery cell assemblies includes a module frame, based on the above description.

Thermal interface material (TIM) layers may be provided between the base plate 111B of the pack housing 110 and the plurality of battery cell assemblies 120. The TIM layers may include a resin composition. The TIM layers may be provided by a process of applying a thermal resin.

The resin composition may be a composition that is curable at room temperature. That is, a curing reaction of the resin composition may start and proceed at room temperature. The curing reaction of the resin composition may be promoted at a temperature higher than room temperature. A curing reaction rate of the resin composition at a temperature higher than room temperature may be higher than a curing reaction rate of the resin composition at room temperature. As a non-limiting example, a major component of the resin composition may be a silicon resin, a polyol resin, an epoxy resin, or an acrylic resin.

The center beam 116 may extend in the X-axis direction. The center beam 116 may isolate the plurality of battery cell assemblies 120 in the Y-axis direction. The center beam 116 may be interposed between the plurality of battery cell assemblies 120.

In FIG. 1, the plurality of battery cell assemblies 120 may be arranged in a 3x2 array. The arrangement of the plurality of battery cell assemblies 120 of FIG. 1 is a non-limiting example and should not be understood as limiting the technical idea of the present invention in any sense. Those of ordinary skill in the art will be able to easily derive the plurality of battery cell assemblies 120 arranged in an MxN array (here, M and N are each an integer of 2 or more), based on the above description.

The battery pack 100 may further include a lid coupled to the side walls 112, 113, 114, and 115 of the pack housing 110. The lid may cover elements, such as the battery cell assemblies 120 and electronic components, inside the battery pack 100. The lid may be fixed to the pack housing 110 by a mechanical coupling means such as bolting.

The battery pack 100 may further include exhaust devices coupled to the side walls 114 and 115. One of the side walls 114 and 115 may include exhaust holes connected to the exhaust devices. The exhaust devices may be configured to delay thermal propagation by discharging a high-temperature gas from the inside of the battery pack 100 to the outside when a thermal runaway event occurs in the plurality of battery cell assemblies 120.

Here, the thermal runaway event of the plurality of battery cell assemblies 120 is a state in which a change of temperature of the plurality of battery cell assemblies 120 accelerates the change of temperature, and is uncontrollable positive feedback. A temperature of the plurality of battery cell assemblies 120 that are in a thermal runaway state sharply increases, and a large amount of a high-pressure gas and combustion debris are discharged therefrom.

The battery pack 100 may further include a battery management system (BMS). The BMS may be configured to monitor, balance, and control the battery pack 100. The monitoring of the battery pack 100 may include monitoring voltages and currents of certain nodes in the plurality of battery cell assemblies 120 and monitoring a distribution of temperatures at set positions in the battery pack 100.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing a decrease in the lifespan of each of the plurality of battery cell assemblies 120.

The battery pack 100 may further include additional electronic components such as a cooling device, a power relay assembly (PRA), and a safety plug. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs. The additional electronic components may be interposed between the plurality of battery cell assemblies 120 and the side wall 115. A space between the battery cell assemblies 120 and the side wall 115 may be referred to as an electronic component mounting area.

The battery pack 100 may further include a plurality of bus bars configured to electrically connect the plurality of battery cell assemblies 120. The plurality of battery cell assemblies 120 may be connected in series by the plurality of bus bars. Accordingly, the battery pack 100 may be configured to output a high voltage to an external load (e.g., a motor of a vehicle).

### (Second Embodiment)

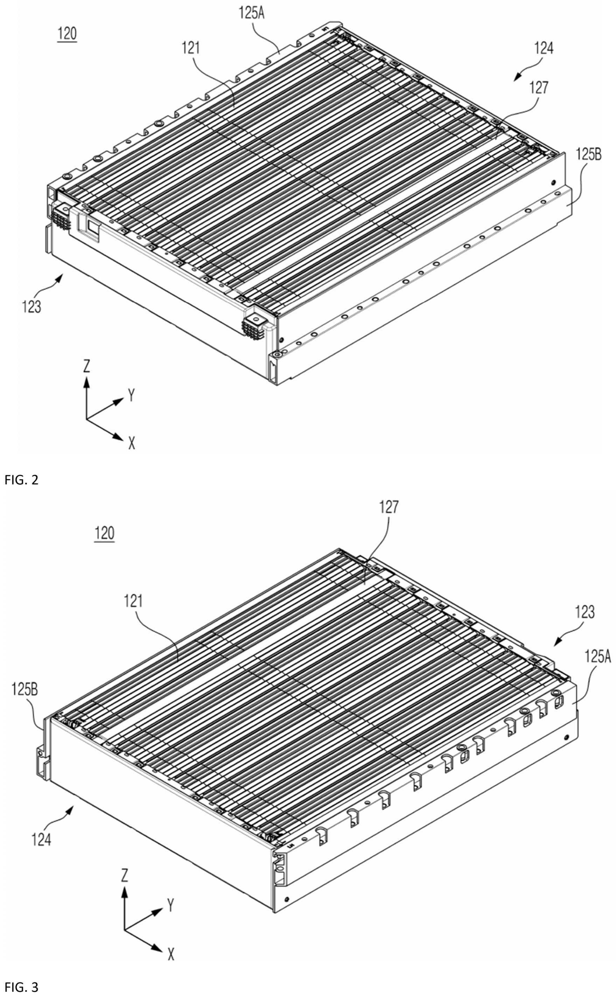

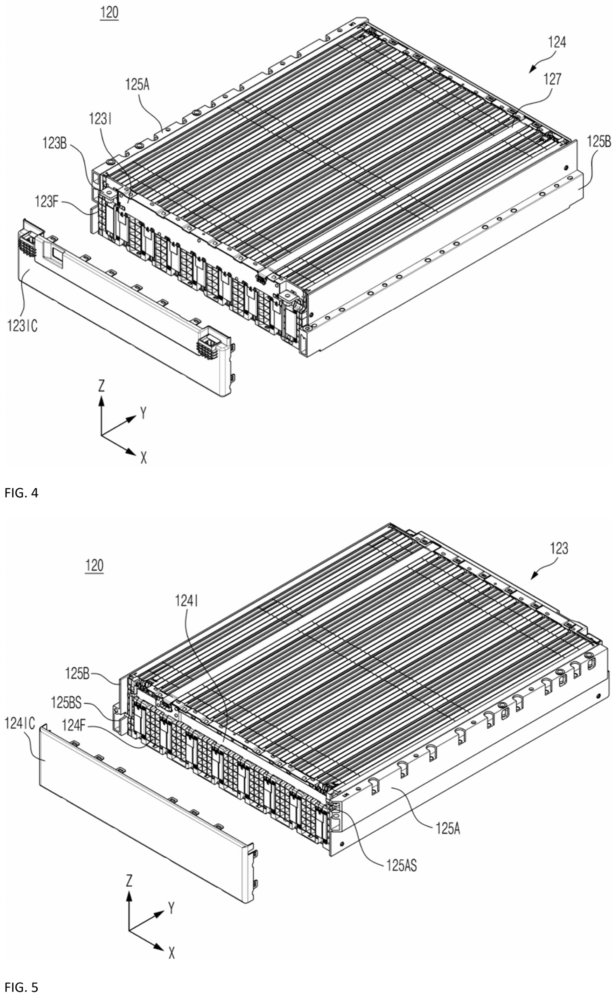

FIGS. 2 to 5 are perspective views of the battery cell assembly 120 of FIG. 1.

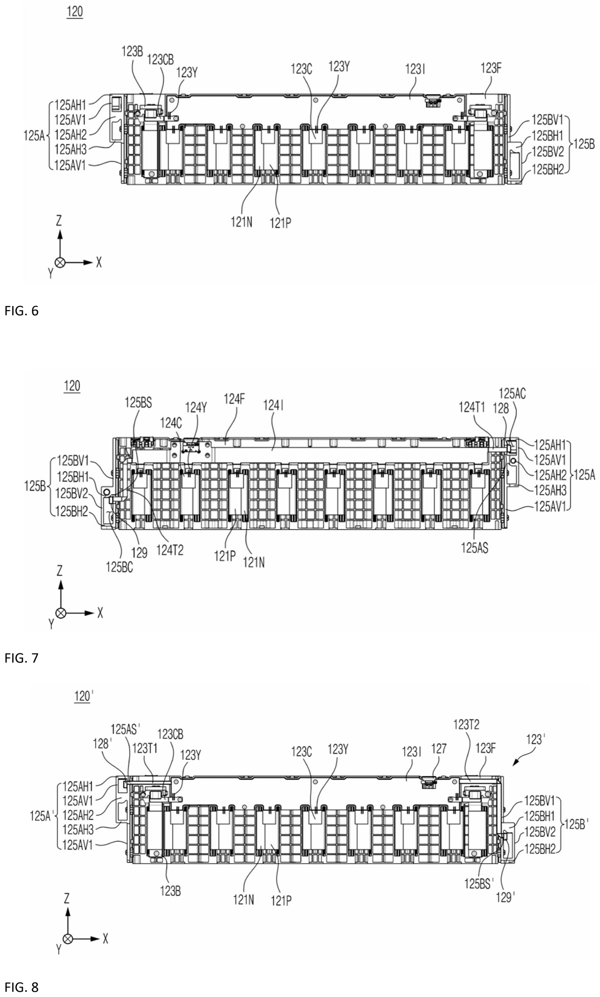

FIGS. 6 and 7 are an exploded front view and an exploded rear view of the battery cell assembly 120 of FIG. 1.

In FIGS. 2 to 7, the definition of directions is based on a case in which the battery cell assembly 120 is on the pack housing 110 (see FIG. 1). In FIGS. 2 to 7, the X-axis direction may be a direction in which a plurality of battery cells 121 are arranged, the Y-axis direction may be a direction in which a first circuit assembly 123 and a second circuit assembly 124 are spaced apart from each other, and the Z-axis direction may be substantially perpendicular to each of the X-axis direction and the Y-axis direction.

Referring to FIGS. 2 to 7, each of the plurality of battery cell assemblies 120 may include the plurality of battery cells 121, the first circuit assembly 123, the second circuit assembly 124, first and second cross-beams 125A and 125B, a flexible flat cable (FFC) assembly 127, and first and second temperature sensors 128 and 129.

Each of the plurality of battery cells 121 may be a lithium ion battery. Each of the plurality of battery cells 121 includes an electrode assembly, an electrolyte, and a case. Each of the plurality of battery cells 121 may be one of a cylindrical battery cell, a prismatic battery cell, and a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween.

Each of the plurality of battery cells 121 may include a positive electrode lead 121P and a negative electrode lead 121N. An electrode assembly of each of the plurality of battery cells 121 may be connected to the positive electrode lead 121P and the negative electrode lead 121N.

The plurality of battery cells 121 may form a plurality of banks. Each of the plurality of banks may include one or more battery cells 121. The one or more battery cells 121 of each of the plurality of banks may be connected with each other in parallel. The plurality of banks may be connected to each other in series.

The negative electrode leads 121N of the one or more battery cells 121 of each of the plurality of banks may be short-circuited with the positive electrode leads 121P of the one or more battery cells 121 of a subsequent bank. The negative electrode leads 121N of the one or more battery cells 121 of each of the plurality of banks may be welded to the positive electrode leads 121P of the one or more battery cells 121 of the subsequent bank.

The positive electrode leads 121P of the one or more battery cells 121 of each of the plurality of banks may be short-circuited with the negative electrode leads 121N of the one or more battery cells 121 of a preceding bank. The positive electrode leads 121P of the one or more battery cells 121 of each of the plurality of banks may be welded to the negative electrode leads 121N of the one or more battery cells 121 of the preceding bank.

The number of banks connected in series and the number of battery cells 121 included in the plurality of banks may be determined according to a voltage and a current to be output from each of the battery cell assemblies 120.

The plurality of battery cells 121 may be arranged in the X-axis direction. A plurality of pads may be provided between the plurality of battery cells 121. The plurality of pads may horizontally press the plurality of battery cells 121 and prevent or alleviate the swelling of the plurality of battery cells 121. The plurality of pads may isolate the plurality of battery cells 121 from each other. According to embodiments, each of the plurality of pads may include polyurethane (PU). According to embodiments, each of the plurality of pads may include a refractory material such as a silicone.

According to embodiments, the plurality of pads and the plurality of banks may be alternately arranged. According to embodiments, one of the plurality of banks may be interposed between neighboring pads, and one of the other pads may be interposed between neighboring banks. According to other embodiments, two or more banks may be interposed between neighboring pads.

The first circuit assembly 123 and the second circuit assembly 124 may be spaced apart from each other in the Y-axis direction with the plurality of battery cells 121 interposed therebetween. The first circuit assembly 123 and the second circuit assembly 124 may be electrically connected to each other by the FFC assembly 127. Accordingly, sensed values (e.g., a voltage, current, and/or temperature) of the second circuit assembly 124 may be transmitted to the first circuit assembly 123 through the FFC assembly 127.

The first circuit assembly 123 may include an insulating frame 123F, an integrated circuit 123I, bus bars 123B, sensing pads 123C, sensing bars 123CB, wires 123Y, and an insulating cover 123IC.

The insulating frame 123F may include an insulating material such as plastic. The insulating frame 123F may cover front sides of the plurality of battery cells 121. The insulating frame 123F may support the positive electrode leads 121P, the negative electrode leads 121N, the bus bars 123B, and the integrated circuit 123I.

The bus bars 123B may be short-circuited from positive electrode leads 121P of one or more battery cells 121 of a first bank and negative electrode leads 121N of one or more battery cells 121 of a last bank. The bus bars 123B may be welded to the positive electrode leads 121P of the one or more battery cells 121 of the first bank and the negative electrode leads 121N of the one or more battery cells 121 of the last bank. Resulting voltages of the plurality of battery cells 121 may be output through the bus bars 123B. The bus bars 123B may be fixed to the insulating frame 123F.

The integrated circuit 123I may be mounted on the insulating frame 123F. The positive electrode leads 121P and the negative electrode leads 121N that are welded to each other may form nodes inside the battery cell assembly 120. The integrated circuit 123I may be configured to measure voltages of the nodes. More specifically, the sensing bars 123CB may be coupled to the bus bars 123B, and the sensing pads 123C may be coupled to a corresponding one of sets of positive electrode leads 121P and negative electrode leads 121N that are welded to each other. The wires 123Y may connect the integrated circuit 123I and the sensing bars 123CB or connect the integrated circuit 123I and the sensing pads 123C.

The sensing bars 123CB and the sensing pads 123C may include a conductive material. The sensing bars 123CB may have a rod shape. The sensing pads 123C may have a patch shape, a plate shape or a pad shape. Accordingly, voltages of sets of the positive electrode leads 121P and the negative electrode leads 121N that are welded to each other and voltages of the bus bars 123B may be measured.

The insulating cover 123IC may include an insulating material such as plastic. The insulating cover 123IC may be interference-fitted into the insulating frame 123F. The insulating cover 123IC may cover the integrated circuit 1231, the bus bars 123B, the sensing pads 123C, the sensing bars 123CB, and the wires 123Y to protect electrical elements of the first circuit assembly 123.

The second circuit assembly 124 may include an insulating frame 124F, an integrated circuit 124I, sensing pads 124C, wires 124Y, first and second cables 124T1 and 124T2, and an insulating cover 124IC.

The insulating frame 124F may include an insulating material such as plastic. The insulating frame 124F may cover rear sides of the plurality of battery cells 121. The insulating frame 124F may support the positive electrode leads 121P, the negative electrode leads 121N, and the integrated circuit 1241.

The integrated circuit 124I may be mounted on the insulating frame 124F. The integrated circuit 124I may be configured to measure voltages of nodes inside the battery cell assembly 120. The sensing pads 124C may be coupled to a corresponding one of the sets of positive electrode leads 121P and negative electrode leads 121N that are welded to each other. The wires 124Y may connect the integrated circuit 124I to the sensing pads 124C. Accordingly, voltages of the sets of the positive electrode leads 121P and the negative electrode leads 121N that are welded to each other may be measured.

The insulating cover 124IC may include an insulating material such as plastic. The insulating cover 124IC may be interference-fitted into the insulating frame 124F. The insulating cover 124IC may cover the integrated circuit 1241, the sensing pads 124C, the wires 124Y, and the first and second cables 124T1 and 124T2 to protect electrical elements of the second circuit assembly 124.

The first cable 124T1 may connect the first temperature sensor 128 and the integrated circuit 1241. The first cable 124T1 may be connected to the first temperature sensor 128 through a first slit 125AS of a vertical rib 125AV1 of the first cross-beam 125A.

The second cable 124T2 may connect the second temperature sensor 129 and the integrated circuit 124I. The second cable 124T2 may be connected to the second temperature sensor 128 through a second slit 125BS of a vertical rib 125BV1 of the second cross-beam 125B.

The cross-beams 125A and 125B may be spaced apart from each other in the X-axis direction with the plurality of battery cells 121 interposed therebetween. The cross-beams 125A and 125B may cover the plurality of battery cells 121. The cross-beams 125A and 125B may be fixed to the plurality of battery cells 121. The cross-beams 125A and 125B may be fixed to the base plate 111 (see FIG. 1) by bolting or the like.

According to embodiments, the cross-beams 125A and 125B may have a stepped structure. According to embodiments, shapes of the cross-beams 125A and 125B may be complementary to each other. The complementary shapes of the cross-beams 125A and 125B may be understood as a concept including a clearance between the cross-beams 125A and 125B for an assembly margin.

The cross-beams 125A and 125B may include a metal such as aluminum. The cross-beams 125A and 125B may be provided by, for example, the extrusion process but are not limited thereto.

The first cross-beam 125A may include vertical ribs 125AV1 and 125AV2 and horizontal ribs 125AH1, 125AH2, and 125AH3. The vertical ribs 125AV1 and 125AV2 may be substantially perpendicular to the X-axis direction. The vertical ribs 125AV1 and 125AV2 may be spaced apart from each other in the X-axis direction. The vertical rib 125AV1 may press the plurality of battery cells 121. The vertical rib 125AV2 may be spaced apart from the plurality of battery cells 121 with the vertical rib 125AV1 interposed therebetween. A length of the vertical rib 125AV1 in the Z-axis direction may be greater than a length of the vertical rib 125AV2 in the Z-axis direction. The vertical rib 125AV2 may cover an upper portion of the vertical rib 125AV1.

The horizontal ribs 125AH1, 125AH2, and 125AH3 may be substantially perpendicular to the Z-axis direction. The horizontal ribs 125AH1, 125AH2, and 125AH3 may be spaced apart from one another in the Z-axis direction. The horizontal ribs 125AH1, 125AH2, and 125AH3 may be interposed between the vertical ribs 125AV1 and 125AV2. The horizontal ribs 125AH1, 125AH2, and 125AH3 may be connected to the vertical ribs 125AV1 and 125AV2. The horizontal rib 125AH2 may be interposed between the horizontal ribs 125AH1 and 125AH3.

The horizontal ribs 125AH1, 125AH2, and 125AH3 and the vertical ribs 125AV1 and 125AV2 may define a cavity 125AC. The cavity 125AC may be longer than each of the plurality of battery cells 121. The cavity 125AC may extend in the Y-axis direction. A length of the cavity 125AC in the Y-axis direction may be greater than a length of each of the plurality of battery cells 121 in the Y-axis direction but embodiments are not limited thereto. Accordingly, the cross-beam 125A may be reduced in weight, and the energy density of the battery cell assembly 120 may be improved.

The first temperature sensor 128 may be in the cavity 125AC. The vertical rib 125AV1 may include the first slit 125AS connected to the cavity 125AC and thus may allow connection of the first cable 124T1 and the first temperature sensor 128. The first cable 124T1 may include a portion that passes through the first slit 125AS.

The first cross-beam 125A includes a metal material such as aluminum and thus may have high thermal conductivity. Accordingly, a temperature of the first cross-beam 125A may be substantially the same as a temperature of the battery cell 121 adjacent to the first cross-beam 125A. Accordingly, the temperature of the first cross-beam 125A measured by the first temperature sensor 128 may indicate the temperature of the battery cell 121 adjacent to the first cross-beam 125A among the plurality of battery cells 121.

Furthermore, the first temperature sensor 128 is in the first cavity 125AC and thus may be isolated from the plurality of battery cells 121. That is, the first temperature sensor 128 may be spaced apart from the plurality of battery cells 121 and does not interfere between the first cross-beam 125A and the plurality of battery cells 121, and thus, the plurality of battery cells 121 may be uniformly pressed by the first cross-beam 125A.

The second cross-beam 125B may include vertical ribs 125BV1 and 125BV2 and horizontal ribs 125BH1 and 125BH2. The vertical ribs 125BV1 and 125BV2 may be substantially perpendicular to the X-axis direction. The vertical ribs 125BV1 and 125BV2 may be spaced apart from each other in the X-axis direction. The vertical rib 125BV1 may press the plurality of battery cells 121. The vertical rib 125BV2 may be spaced apart from the plurality of battery cells 121 with the vertical rib 125BV1 interposed therebetween. A length of the vertical rib 125BV1 in the Z-axis direction may be greater than a length of the vertical rib 125BV2 in the Z-axis direction. The vertical rib 125BV2 may cover a lower portion of the vertical rib 125BV1.

The horizontal ribs 125BH1 and 125BH2 may be substantially perpendicular to the Z-axis direction. The horizontal ribs 125BH1 and 125BH2 may be spaced apart from each other in the Z-axis direction. The horizontal ribs 125BH1 and 125BH2 may be interposed between the vertical ribs 125BV1 and 125BV2. The horizontal ribs 125BH1 and 125BH2 may be connected to the vertical ribs 125BV1 and 125BV2. The horizontal rib 125BH2 may be interposed between the horizontal ribs 125BH1 and 125BH2.

The horizontal ribs 125BH1 and 125BH2 and the vertical ribs 125BV1 and 125BV2 may define a cavity 125BC. The cavity 125BC may be longer than each of the plurality of battery cells 121. The cavity 125BC may extend in the Y-axis direction. A length of the cavity 125BC in the Y-axis direction may be greater than the length of each of the plurality of battery cells 121 in the Y-axis direction but embodiments are not limited thereto. Accordingly, the cross-beam 125B may be reduced in weight, and the energy density of the battery cell assembly 120 may be improved.

The second temperature sensor 129 may be in the cavity 125BC. The vertical rib 125BV1 may include the second slit 125BS connected to the cavity 125BC and thus may allow connection of the second cable 124T2 and the second temperature sensor 129. The second cable 124T2 may include a portion that passes through the second slit 125BS.

The second cross-beam 125B includes a metal material such as aluminum and thus may have high thermal conductivity. The second cross-beam 125B includes a metal material such as aluminum and thus may have high thermal conductivity. Accordingly, a temperature of the second cross-beam 125B may be substantially the same as a temperature of the battery cell 121 adjacent to the second cross-beam 125B. Accordingly, the temperature of the second cross-beam 125B measured by the second temperature sensor 129 may indicate the temperature of the battery cell 121 adjacent to the second cross-beam 125B among the plurality of battery cells 121.

Furthermore, the second temperature sensor 129 is in the second cavity 125BC and thus may be isolated from the plurality of battery cells 121. That is, the second temperature sensor 129 may be spaced apart from the plurality of battery cells 121 and does not interfere between the second cross-beam 125B and the plurality of battery cells 121, and thus, the plurality of battery cells 121 may be uniformly pressed by the second cross-beam 125B.

According to embodiments, the horizontal ribs 125AH1, 125AH2, and 125AH3 and the horizontal ribs 125BH1 and 125BH2 may be at different levels. Here, the levels of the horizontal ribs 125AH1, 125AH2, and 125AH3 and the horizontal ribs 125BH1 and 125BH2 may be, for example, heights of the horizontal ribs 125AH1, 125AH2, 125AH3 and the horizontal ribs 125BH1 and 125BH2 in the Z-axis direction with respect to a bottom surface of a space, such as the base plate 111 (see FIG. 1), in which the battery cell assembly 120 is disposed.

The horizontal rib 125AH1 may be at a higher level than the horizontal rib 125AH2, the horizontal rib 125AH2 may be at a higher level than the horizontal rib 125AH3, the horizontal rib 125AH3 may be at a higher level than the horizontal rib 125BH1, and the horizontal rib 125BH1 may be at a higher level than the horizontal rib 125BH2.

According to embodiments, the first temperature sensor 128 and the second temperature sensor 129 may be located at different positions in the Z-axis direction. For example, when the battery cell assembly 120 is on the pack housing 110, a distance between the second temperature sensor 129 and the base plate 111 (see FIG. 1) may be different from a distance between the first temperature sensor 128 and the base plate 111. The distance between the second temperature sensor 129 and the base plate 111 (see FIG. 1) may be less than the distance between the first temperature sensor 128 and the base plate 111. Accordingly, a temperature distribution in the battery cell assembly 120 in the Z-axis direction may be identified, in addition to a temperature distribution in the battery cell assembly 120 in the X-axis direction, and thus, improved temperature monitoring of the battery cell assembly 120 may be provided.

Referring to FIGS. 1 to 7, the first circuit assembly 123 of each of the plurality of battery cell assemblies 120 may be disposed on a central portion of the pack housing 110 (e.g., a central portion thereof in the Y-axis direction). According to embodiments, the second circuit assembly 124 of each of the plurality of battery cell assemblies 120 may be disposed on at an edge portion of the pack housing 110 (e.g., an edge portion thereof in the Y-axis direction).

According to embodiments, a distance between the first circuit assembly 123 of each of the plurality of battery cell assemblies 120 and the center of the base plate 111 in the Y-axis direction may be less than a distance between the second circuit assembly 124 of each of the plurality of battery cell assemblies 120 and the center of the base plate 111 in the Y-axis direction.

### (Third Embodiment)

FIG. 8 is a diagram for describing a battery cell assembly 120' according to other embodiments. The battery cell assembly 120' may replace at least one of the plurality of battery cell assemblies 120 of FIG. 1.

Referring to FIG. 8, a plurality of battery cell assemblies 120' may include a plurality of battery cells 121 (see FIG. 2), a first circuit assembly 123', a second circuit assembly 124 (see FIG. 2), first and second cross-beams 125A' and 125B', an FFC assembly 127, first temperature sensors 128 and 128', and second temperature sensors 129 and 129'.

The plurality of battery cells 121 (see FIG. 2), the second circuit assembly 124 (see FIG. 2), the FFC assembly 127, and the first and second temperature sensors 128 and 129 are substantially the same as those described above with reference to FIGS. 2 to 7, and thus, redundant description thereof is omitted here.

The first circuit assembly 123' may include an insulating frame 123F, an integrated circuit 123I, bus bars 123B, sensing pads 123C, sensing bars 123CB, wires 123Y, an insulating cover 123IC, and first and second cables 123T1 and 123T2.

The insulating frame 123F, the integrated circuit 123I, the bus bars 123B, the sensing pads 123C, the sensing bars 123CB, the wires 123Y, and the insulating cover 123IC are substantially the same as those described above with reference to FIGS. 2 to 7, and thus, redundant description thereof is omitted here.

The first temperature sensor 128' may be in a cavity 125AC. A vertical rib 125AV1 of the first cross-beam 125A' may include a first slit 125AS' connected to the cavity 125AC and thus may allow connection of the first cable 123T1 and the first temperature sensor 128'. The first cable 123T2 may include a portion that passes through a second slit 125BS'.

The second temperature sensor 129' may be in a cavity 125BC. A vertical rib 125BV1 of the second cross-beam 125B' may include a second slit 125BS' connected to the cavity 125BC and thus may allow connection of the second cable 123T2 and the second temperature sensor 129'. The second cable 123T2 may include a portion passing through the second slit 125BS'.

The first cross-beam 125A' is substantially the same as the first cross-beam 125A (see FIG. 6) except that the first cross-beam 125A' further includes the first slit 125AS'. The second cross-beam 125B' is substantially the same as the second cross-beam 125B (see FIG. 6) except that the second cross-beam 125B' further includes the second slit 125BS'.

Accordingly, a temperature of the first cross-beam 125A' measured by the first temperature sensor 128' may indicate a temperature of the battery cell 121 adjacent to the first cross-beam 125A' among the plurality of battery cells 121 (see FIG. 2). A temperature of the second cross-beam 125B' measured by the second temperature sensor 129' may indicate a temperature of the battery cell 121 adjacent to the second cross-beam 125B' among the plurality of battery cells 121.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery cell assembly comprising:
a plurality of battery cells;
first and second cross-beams spaced apart from each other with the plurality of battery cells between the first and second cross-beams;
a circuit assembly including an integrated circuit coupled to the plurality of battery cells and configured to measure voltages of the plurality of battery cells;
a first temperature sensor spaced apart from the plurality of battery cells while in contact with the first cross-beam; and
a second temperature sensor spaced apart from the plurality of battery cells while in contact with the second cross-beam.

2. The battery cell assembly of claim 1, wherein the first cross-beam includes a first cavity, and
the first temperature sensor is in the first cavity.

3. The battery cell assembly of claim 2, wherein the first cavity is longer than each of the plurality of battery cells.

4. The battery cell assembly of claim 2, wherein the first cross-beam includes first and second vertical ribs that define the first cavity, and first and second horizontal ribs between the first and second vertical ribs, and
the first temperature sensor is in contact with the first vertical rib.

5. The battery cell assembly of claim 4, wherein the first vertical rib of the first cross-beam includes a first slit connected to the first cavity.

6. The battery cell assembly of claim 5, wherein the integrated circuit includes a first cable connected to the first temperature sensor while passing through the first slit.

7. The battery cell assembly of claim 4, wherein the second cross-beam includes a second cavity, and
the second temperature sensor is in the second cavity.

8. The battery cell assembly of claim 7, wherein the second cross-beam includes third and fourth vertical ribs that define the second cavity, and third and fourth horizontal ribs between the third and fourth vertical ribs, and
the second temperature sensor is in contact with the third vertical rib.

9. The battery cell assembly of claim 8, wherein the third vertical rib of the second cross-beam includes a second slit connected to the second cavity.

10. The battery cell assembly of claim 9, wherein the integrated circuit includes a second cable connected to the second temperature sensor while passing through the second slit.

11. A battery pack comprising:
a pack housing; and
a plurality of battery cell assemblies on a base plate of the pack housing,
wherein each of the plurality of battery cell assemblies includes a plurality of battery cells, first and second cross-beams spaced apart from each other with the plurality of battery cells between the first and second cross-beams, a first temperature sensor in a first cavity of the first cross-beam, and a second temperature sensor in a second cavity of the second cross-beam.

12. The battery pack of claim 11, wherein a distance between the second temperature sensor and the base plate is less than a distance between the first temperature sensor and the base plate.
